Europäisches Patentamt

European Patent Office

Office européen des brevets

(11) Numéro de publication : **0 455 140 B1**

# (12) FASCICULE DE BREVET EUROPEEN

(45) Date de publication du fascicule du brevet :
**18.10.95 Bulletin 95/42**

(51) Int. Cl.⁶ : **H04L 27/22**

(21) Numéro de dépôt : **91106701.5**

(22) Date de dépôt : **25.04.91**

(54) **Dispositif d'évaluation d'écart de fréquence.**

(30) Priorité : **04.05.90 FR 9005660**

(43) Date de publication de la demande :
**06.11.91 Bulletin 91/45**

(45) Mention de la délivrance du brevet :
**18.10.95 Bulletin 95/42**

(84) Etats contractants désignés :
**AT BE CH DE DK ES FR GB GR IT LI LU NL SE**

(56) Documents cités :
**EP-A- 0 091 167**
**US-A- 4 466 108**

(73) Titulaire : **ALCATEL MOBILE
COMMUNICATION FRANCE
15, rue de la Baume
F-75008 Paris (FR)**

(72) Inventeur : **Desperben, Lydie
10, rue Charles Chefson
F-92270 Bois Colombes (FR)**
Inventeur : **Abdesselem, Ouélid
5, rue Antoine Bourdelle
F-75015 Paris (FR)**

(74) Mandataire : **Weinmiller, Jürgen et al
Lennéstrasse 9
Postfach 24
D-82336 Feldafing (DE)**

## Description

Dispositif d'évaluation d'écart de fréquence

La présente invention concerne un dispositif d'évaluation d'écart de fréquence.

Les équipements de démodulation recevant un signal de réception qui est une onde porteuse modulée par un signal en bande de base comprennent couramment un oscillateur local produisant un signal local utilisé pour effectuer la transposition en bande de base. Il est nécessaire de connaître précisément l'écart de fréquence entre l'onde porteuse et le signal local de manière à retrouver le signal en bande de base. La fréquence de l'oscillateur local, bien que prévue pour être égale à la fréquence de l'onde porteuse, présente pratiquement un léger écart avec celle-ci.

L'invention s'applique donc dans le cadre où les deux fréquences à comparer sont proches. C'est le cas, notamment, dans le système de radiocommunication cellulaire numérique spécifié par le groupe spécial mobile (GSM) qui fait partie de la conférence européenne des administrations des Postes et Télécommunications (CEPT) où un terminal mobile reçoit un signal de réception en bande de base modulé selon le principe de déplacement minimal à filtre gaussien. Dans ce type de modulation dite GMSK, le signal en bande de base se présente à l'émission sous la forme d'une succession de symboles lorsqu'il est examiné périodiquement selon la fréquence de modulation qui est constante, un symbole ayant une phase qui est l'un quelconque des multiples de $\pi/2$ abstraction faite de l'interférence inter-symboles.

Cette modulation, bien que présentant ainsi quatre états de phase, supporte dans le système considéré une information binaire, l'écart de phase entre deux symboles successifs ne pouvant prendre pour valeur que $+\pi/2$ ou $-\pi/2$. Le signal en bande de base de nature binaire est par conséquent translaté en fréquence à la réception de manière à présenter uniquement deux états de phase 0 et $\pi$.

A la suite de cette translation de fréquence, le signal en bande de base est démodulé et échantillonné à une fréquence d'échantillonnage qui présente un rapport de proportionalité avec la fréquence du signal local identique à celui que présente la fréquence de modulation avec la fréquence de l'onde porteuse.

La phase d'un échantillon se présente comme la somme d'un déphasage dû à la modulation (0 ou $\pi$) et d'un déphasage de synchronisation proportionnel à l'écart de fréquence qui doit être évalué. Les échantillons ont, par ailleurs, tous le même module.

Il est ainsi connu pour évaluer ce déphasage de synchronisation d'élever un échantillon au carré supprimant ainsi son déphasage de modulation.

Une méthode couramment employée, telle que décrite dans le brevet américain US-A-4.466.108, consiste à additionner les valeurs à la puissance M d'une première série d'échantillons modulés à M états de phase pour produire un premier vecteur, puis à répéter cette opération pour une deuxième série du même nombre d'échantillons afin de produire un deuxième vecteur.

La racine Mème de l'écart angulaire de ces deux vecteurs rapporté à la durée séparant les milieux de ces deux séries permet ainsi d'obtenir l'écart de fréquence.

Cette solution est très sensible au bruit et à l'interférence inter-symboles.

La présente invention a ainsi pour objet un dispositif d'évaluation d'écart de fréquence entre un signal de réception présentant plusieurs états de phase et un signal local dont les performances sont sensiblement améliorées tant vis-à-vis du bruit que de l'interférence inter-symboles comme il ressort des résultats de simulation donnés par la suite. Elle s'applique, par exemple, à la correction de fréquence d'un oscillateur local.

Le dispositif d'évaluation d'écart de fréquence selon l'invention entre l'onde porteuse d'un signal de réception, et un signal local de fréquences proches, est tel que défini dans la revendication 1.

De plus, le dispositif d'évaluation d'écart de fréquence comprend une unité de commande recevant un signal d'information identifiant pour chacune de ces séries les échantillons traités qui en font partie et produisant un premier signal de commande au moment où se présente un échantillon du signal de reception à traiter.

En outre, le dispositif d'évaluation d'écart de fréquence comprend une porte qui transmet comme signal de sortie un échantillon du signal de reception en réponse au premier signal de commande.

Dans un mode de réalisation du dispositif d'évaluation d'écart de fréquence, la modulation comprenant deux états de phase 0 et $\pi$, il comprend un détecteur de signe produisant un signal d'inversion N si le déphasage de modulation du signal de sortie vaut $\pi$.

Avantageusement, le dispositif d'évaluation d'écart de fréquence comprend un circuit de changement de signe produisant un signal de synchronisation dont la valeur est celle du signal de sortie ou son opposé selon que le signal d'inversion est respectivement absent ou présent.

De plus, dans le dispositif d'évaluation d'écart de fréquence, certains des échantillons du signal de reception correspondant à des bits connus qui sont identifiés par le signal d'information, l'unité de commande produit un deuxième signal de commande au moment où un dit échantillon du signal de réception correspond à un bit connu et un signal de modification si ce bit connu présente une phase de π ; par ailleurs un circuit de multiplexage produit un signal d'échange de signe qui prend la valeur du signal d'inversion ou du signal de modification selon que le deuxième signal de commande est respectivement absent ou présent et un circuit de changement de signe produit un signal de synchronisation dont la valeur est celle du signal de sortie ou son opposé selon que le signal d'échange de signe est respectivement absent ou présent.

En outre, le dispositif d'évaluation d'écart de fréquence comprend un accumulateur produisant un signal d'accumulation ayant pour valeur la somme des valeurs successives du signal de synchronisation, cet accumulateur étant remis à zéro avant le début de chacune desdites séries d'échantillons.

De même, le dispositif d'évaluation d'écart de fréquence comprend un circuit de sélection qui transmet à un premier registre le signal d'accumulation pour un premier état d'un signal de sélection identifiant le dernier échantillon d'une première série d'échantillons et à un second registre pour un deuxième état du signal de sélection identifiant le dernier échantillon d'une deuxième série d'échantillons, le signal de sélection étant produit par l'unité de commande et il comprend un circuit d'évaluation produisant l'écart de fréquence à partir de la phase moyenne de la première série issue du premier registre et de la phase moyenne de la deuxième série issue du second registre.

Par exemple, dans le dispositif d'évaluation d'écart de fréquence le signal de réception provient d'un équipement d'émission du système de radiocommunication cellulaire numérique et est structuré en intervalles de temps véhiculant de la parole ou des données, une première et une deuxième séries d'échantillons correspondant respectivement à la première et à la deuxième moitié d'un intervalle de temps considéré sans sa séquence de garde.

Les différents objets et caractéristiques de l'invention apparaîtront maintenant avec plus de détails dans le cadre d'exemples de réalisation donnés à titre non limitatif en se référant aux figures annexées qui représentent :

- la figure 1 : l'étage d'entrée d'un récepteur dans lequel prend place l'invention,
- la figure 2 : un diagramme de la structure du signal de réception reçu par le dispositif de l'invention,
- la figure 3 : un mode de réalisation du dispositif selon l'invention.

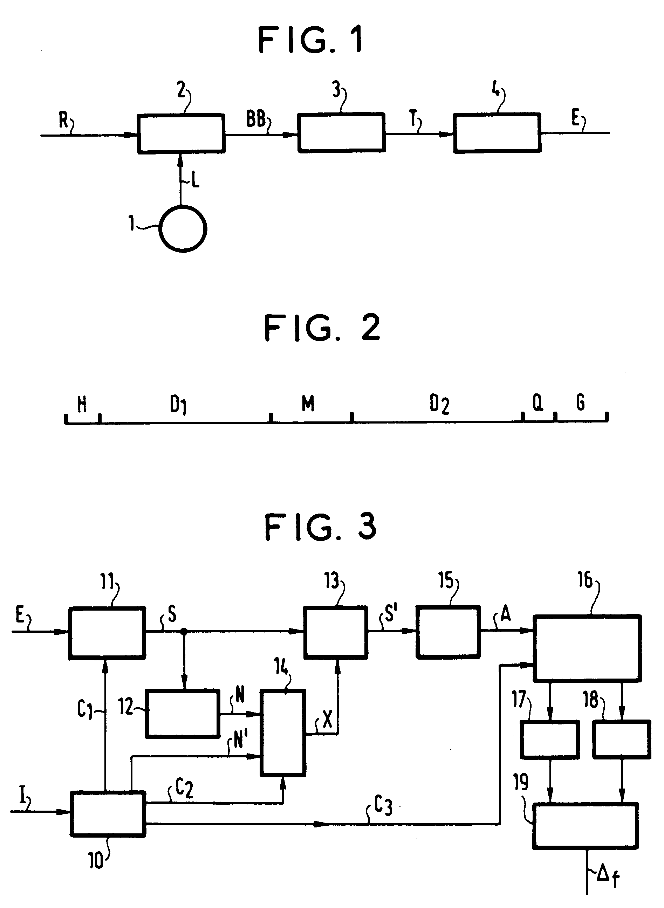

L'invention sera d'abord présentée dans un domaine d'application spécifique, celui du système de radiocommunication cellulaire numérique précisément décrit dans les recommandations du GSM publiées par la CEPT (Conférence Européenne des Administrations des Postes et Télécommunications). Le dispositif d'évaluation d'écart de fréquence est implanté dans un terminal mobile considéré dans ce cas comme un récepteur. Un schéma synoptique de l'étage d'entrée de ce récepteur est présenté à la figure 1.

Le récepteur reçoit un signal de réception R contenant une information numérique composée de bits par un équipement d'émission dénommé station de base. Ce signal est modulé en bande de base par deux signaux en quadrature de phase selon une fréquence de modulation et peut donc être interprété comme un vecteur complexe.

Le récepteur comprend un oscillateur local 1 qui produit un signal local L dont la fréquence diffère de $\Delta f$ de la fréquence porteuse du signal de réception. Il comprend de plus un circuit de transposition en bande de base 2 pour produire le signal en bande de base BB dont la fréquence est égale à la différence de celle du signal de réception R et de celle du signal local L. Derrière ce circuit 2 figure un circuit de translation en fréquence 3 qui transforme le signal en bande de base BB à quatre états de phase (multiples de $\pi/2$) en un signal translaté T à deux états de phase $(0, \pi)$.

Un circuit de démodulation et de filtrage adapté 4 produit des échantillons $E_i$ du signal translaté T selon une fréquence d'échantillonnage $f_e$. Le rapport de cette fréquence d'échantillonnage à celle du signal local est égal au rapport de la fréquence de modulation à celle du signal de réception. Ces échantillons au nombre de n sont centrés sur l'axe des réels du plan complexe par l'élimination du déphasage de transmission entre la station de base et le récepteur provenant notamment du temps de propagation. Les échantillons étant supposés tous de même module, ce module sera, par hypothèse, égal à un et ils peuvent être représentés par l'équation suivante :

$$E_i = \exp j. (2\pi. \Delta f. (i - \frac{n}{2}). Te + k.\pi + \varphi ii) \quad (1)$$

où k prend comme valeur soit zéro soit un, i est un nombre entier compris entre zéro et n, Te est la période d'échantillonnage et $\varphi ii$ un déphasage d'interférence dû à l'interférence inter-symboles.

La phase $\varphi_i$ d'un échantillon $E_i$ apparaît comme la somme d'un déphasage de modulation $\varphi_{mi}$, d'un déphasage de synchronisation $\varphi_{si}$ et du déphasage d'interférence $\varphi ii$:

$\varphi_{mi} = 0$ ou $\pi$

$$\varphi_{si} = 2\pi \Delta f (i - n/2). Te$$

$- \pi/4 < \varphi ii < \pi/4$ du fait du type de modulation et du canal de transmission.

Pour évaluer l'écart de fréquence $\Delta f$ il faut récupérer le déphasage de synchronisation $\varphi_{si}$ à partir de la

EP 0 455 140 B1

phase d'un échantillon quelconque, ce qui impose :

$$\varphi_{sn} \leqq \pi/4 \text{ ou } \varphi_{so} \geqq -\pi/4$$

$$\Delta f \leqq \frac{1}{4.n.Te}$$

Les fréquences du signal de réception R et du signal local L seront donc considérées comme proches si elles satisfont à cette équation.

Le choix du nombre n d'échantillons pendant lequel est effectué la mesure sera maintenant explicité. Les données supportées par le signal de réception R sont structurées en trames regroupant chacune huit intervalles de temps ou paquets. Un tel paquet véhiculant de la parole ou des données représenté dans la figure 2 comprend successivement :

- une séquence d'en-tête H constituée de 3 échantillons correspondant à des bits connus,
- une première séquence de données D1 de 58 échantillons,
- une séquence d'entraînement M formée de 26 échantillons correspondant à des bits connus,
- une deuxième séquence de données D2 de 58 échantillons,
- une séquence de queue Q constituée de 3 échantillons correspondant à des bits connus,
- une séquence de garde G formée du reste du paquet.

Par convention un bit égal à un correspond à un échantillon dont le déphasage de modulation vaut $\pi$, tandis qu'un bit égal à zéro correspond à un échantillon dont le déphasage de modulation vaut zéro.

Les échantillons considérés seront tous ceux du paquet à l'exception de la séquence de garde : n = 148.

La période d'échantillonnage est très voisine de la période de modulation qui vaut 3,69 $\mu$s.

L'écart de fréquence dans ce cas ne doit pas excéder environ 500 Hz c'est-à-dire 0,2% de la fréquence de modulation.

Cette précision de 0,2% est obtenue facilement lors des étapes de présynchronisation qui ont lieu à l'établissement de la communication au moyen du sous-canal de contrôle de fréquence (FCH) et du sous-canal de synchronisation (SCH).

Les différentes caractéristiques des signaux à traiter étant maintenant explicités, le dispositif d'évaluation d'écart de fréquence sera maintenant présenté en se référant à la figure 3.

Le dispositif selon l'invention supprime le déphasage de modulation de chaque échantillon en changeant le signe de celui-ci, si son déphasage de modulation est égal à $\pi$. La phase de chaque échantillon se réduit donc au déphasage de synchronisation et au déphasage d'interférence.

Il fait l'addition des n/2 premiers échantillons ainsi traités. Le résultat de cette addition est alors un premier vecteur dont la phase vaut $- 2\pi \, \Delta f. \frac{n}{4}. \, Te + \Delta\varphi ii1$ où $\Delta\varphi ii1$ est le déphasage résultant d'interférence dû aux différents déphasages d'interférences.

Il fait ensuite l'addition des n/2 échantillons suivant. Le résultat de cet addition est un second vecteur de même module que le précédent dont la phase vaut $2\pi\Delta f. \frac{n}{4}. \, Te + \Delta\varphi ii2$ où $\Delta\varphi ii2$ est le déphasage résultant d'interférence dû aux différents déphasages d'interférence.

Les déphasages résultants d'interférence $\Delta\varphi ii1$, $\Delta\varphi ii2$ sont considérés comme négligeables compte-tenu de la précision souhaitée sur l'évaluation de l'écart de fréquence. De plus les première et deuxième séries d'échantillons peuvent être choisies de manière à réduire ces déphasages résultants d'interférence. Elles sont présentées ici respectivement comme la suite des n/2 premiers échantillons et celle des n/2 échantillons suivants de manière à clarifier l'exposé. L'homme de métier transposera sans difficultés la méthode au cas où ces séries comprennent un nombre différent d'échantillons et commencent à des positions différentes dans le paquet.

Ainsi, la différence du second et du premier vecteurs a donc une phase P qui vaut :

$$P \;=\; 2\pi\Delta f. \frac{n}{2}. \, Te$$

soit, si l'on connaît P :

$$\Delta f \;=\; \frac{P}{\pi. \, n. \, Te} \quad (2)$$

Il est de plus prévu de ne pas changer le signe des échantillons correspondant à des bits connus positifs, ceci afin de limiter les erreurs dues à la chaîne de transmission.

Le dispositif dans le mode réalisation schématisé comprend une unité de commande 10 qui reçoit un signal d'information I élaboré par le récepteur lui spécifiant le début d'un paquet et le numéro d'ordre d'un échantillon dans ce paquet, et qui comprend en mémoire la position et la valeur des bits connus. Cette unité de commande produit :

- un premier signal de commande $C_1$ si l'échantillon présent à la sortie du récepteur est à prendre en

4

compte, c'est-à-dire si c'est l'un des 148 premiers du paquet,
- un deuxième signal de commande $C_2$ si cet échantillon correspond à un bit connu,
- un signal de modification N' si ce bit connu vaut 1,
- un signal de sélection $C_3$ prenant un premier état avec la présence du 74ème échantillon et un deuxième état avec la présence du 148ème échantillon.

Le dispositif comprend une porte 11 qui transmet comme signal de sortie S l'échantillon E qu'elle reçoit du récepteur si le premier signal de commande $C_1$ est présent.

Il comprend un détecteur de signe 12 qui produit un signal d'inversion N si le déphasage de modulation $\varphi$m de l'échantillon considéré vaut $\pi$, ce qui peut se détecter par une partie réelle négative de ce vecteur complexe comme il ressort de l'équation (1).

Il comprend de plus un circuit de changement de signe 13 qui produit un signal de synchronisation S' prenant la valeur du signal de sortie S ou son opposé selon qu'un signal d'échange de signe X est respectivement absent ou présent.

Le signal d'échange de signe X est produit par un circuit de multiplexage 14 et prend la valeur du signal d'inversion N ou du signal de modification N' selon que le deuxième signal de commande $C_2$ est respectivement absent ou présent.

Le dispositif d'évaluation d'écart de fréquence comprend de plus un accumulateur 15 qui produit un signal d'accumulation A ayant pour valeur la somme des différents signaux de synchronisation S' qui lui sont successivement transmis. Cet accumulateur 15 est remis à zéro lorsque il a comptabilisé les n/2 premiers échantillons et lorsqu'il a comptabilisé les n/2 suivants bien que cela n'apparaisse pas dans la figure.

Un circuit de sélection 16 reçoit ce signal d'accumulation A et le transmet à un premier registre 17 ou à un second registre 18 selon que le signal de sélection $C_3$ est respectivement dans son premier ou son deuxième état.

Un circuit d'évaluation 19 calcule la phase P de la différence du contenu du deuxième registre 18 et de celui du premier registre 17. Il évalue l'écart de fréquence $\Delta f$ selon l'équation (2) précédemment établie.

Des moyens de remise à zéro des registres, non représentés, peuvent également être prévus.

On présentera maintenant des résultats de simulation comparant le dispositif d'évaluation d'écart de fréquence de l'invention avec un dispositif procédant par élévation au carré des échantillons dit "dispositif connu".

Ces simulations reproduisent des conditions de propagation définies par le GSM. Ainsi, en amont du dispositif d'évaluation d'écart de fréquence, les éléments suivants ont été modélisés :
- modulation GMSK à l'émission,
- canal de transmission radio reliant la station de base au récepteur,
- transposition en bande de base,
- translation de fréquence,
- démodulation et filtrage adapté.

Le GSM spécifie que le dispositif doit fonctionner avec un rapport signal à bruit supérieur ou égal à 6dB. Il spécifie également, dans le cadre de la recommandation 05.05, les modèles de canaux de transmission radio suivants connus sous le nom de profils :
- le profil en vue directe où un seul rayon de transmission est pris en compte, noté profil 1,
- le profil en terrain vallonné où six rayons de transmission distincts sont pris en compte, noté profil 2,
- le profil urbain où six rayons de transmission sont également pris en compte, noté profil 3.

Le tableau ci-dessous présente la probabilité d'effectuer une erreur d'évaluation de l'écart de fréquence supérieure à 250 Hz dans les deux cas où il vaut 0Hz et 250 Hz avec le dispositif de l'invention et avec le dispositif connu.

| Rapport signal à bruit | | 6 dB | | 10 dB | |
|---|---|---|---|---|---|
| Ecart de fréquence | | 0 Hz | 250 Hz | 0 Hz | 250 Hz |
| Dispositif de L'invention | Profil 1 | 0.2 % | 4 % | | |
| | Profil 2 | 0.15 % | 6 % | 0.04 % | 1 % |
| | Profil 3 | 0.15 % | 2 % | 0.05 % | 1 % |
| Dispositif connu | Profil 1 | 12 % | 15 % | | |
| | Profil 2 | 10 % | 12 % | 2.5 % | 3 % |
| | Profil 3 | 10 % | 10 % | 2 % | 2.5 % |

Il ressort de ces résultats que le dispositif de l'invention présente des performances améliorées par rapport au dispositif connu. Cette amélioration est d'autant plus importante que le rapport signal à bruit est faible et que l'écart de fréquence à évaluer est faible.

Le mode de réalisation présenté doit être considéré uniquement en tant que tel et non comme une limitation de l'invention. Bien d'autres mode de réalisation sont possibles et seront déterminés conformément à la technologie employée qu'elle fasse appel à un programme exécuté par un processeur ou à des circuits câblés.

L'essence de l'invention consiste à acquérir le déphasage de synchronisation moyen d'une première puis d'une deuxième série d'échantillons et de rapporter la différence de ces deux déphasages à la différence des temps moyens durant lesquels ces séries se sont déroulées.

De fait, les éléments du dispositif qui ont été prévus pour rétablir le signe d'échantillons correspondant à des bits connus ne sont pas indispensables. L'invention s'applique si il n'y a pas de bits connus, il suffit pour cela d'appliquer directement le signal d'inversion N sur le circuit de changement de signe 13 à la place du signal d'échange de signe X. Dans ce cas le circuit de multiplexage 14, le deuxième signal de commande $C_2$ et le signal de modification N'sont sans objet.

De manière générale, l'invention s'applique à un signal de réception modulé selon un nombre quelconque d'états de phase. Ce signal de réception sera nécessairement analysé par un organe de démodulation dont la fonction est précisément de régénérer l'état de phase que présentait ce signal lors de son émission en tenant compte des perturbations introduites par la transmission telles que le déphasage de propagation.

Cet organe de démodulation qui ne comprend pas nécessairement un filtre adapté produit un signal de sortie que l'on peut échantillonner.

Les échantillons qui seront fournis au dispositif d'évaluation d'écart de fréquence selon l'invention seront donc répertoriés selon leur état de phase d'origine. Leur phase peut s'analyser comme la somme d'un déphasage de démodulation (correspondant à l'état de phase), d'un déphasage de synchronisation et d'un déphasage d'interférence.

Le dispositif comprendra dans ce cas des moyens pour annuler le déphasage de modulation de chacun des échantillons.

Les échantillons ainsi traités fournissent le signal de synchronisation S' selon l'invention et feront l'objet du traitement qui a déjà été décrit.

Le dispositif d'estimation fonctionnera correctement si l'écart de fréquence est tel que pour une phase donnée, un échantillon ne peut pas présenter plus d'un état de phase. Dans une modulation à k états de phases, l'estimation se déroulant pendant l'apparition de n échantillons espacés selon la période d'échantillonnage Te, la condition de proximité des fréquences du signal de réception et du signal local s'énonce alors, abstraction faite de l'interférence inter-symboles :

$$\Delta f \leqq \frac{1}{k.n.Te}$$

Dans le mode de réalisation qui a été présenté le dispositif de l'invention élabore le déphasage moyen d'une première série puis d'une deuxième série d'échantillons et fait la différence des résultats ainsi obtenus. Les deux séries comprennent le même nombre d'éléments. L'invention s'applique si l'évaluation d'écart de fréquence est faite sur plus de deux séries d'échantillons, des calculs intermédiaires pouvant être faits selon la méthode exposée sur deux séries particulières, les résultats intermédiaires étant ensuite traités de manière à produire l'écart de fréquence.

Il n'est pas non plus indispensable que chaque série comporte le même nombre d'échantillons. Il suffit en effet de normaliser le module du vecteur obtenu par l'addition des échantillons provenant d'une même série.

## Revendications

1. Dispositif d'évaluation d'écart de fréquence entre l'onde porteuse d'un signal de réception (R) et un signal local (L) de fréquences proches, ce signal de réception ayant fait l'objet d'une modulation à plusieurs états de phase par un signal de modulation et présentant donc une phase comprenant un déphasage de transmission, un déphasage de modulation correspondant à un dit état de phase et un déphasage de synchronisation dû audit écart de fréquence, ledit dispositif recevant en provenance d'un organe de démodulation (2, 3, 4) des échantillons (E) dudit signal de réception dans lesquels ledit déphasage de transmission est supprimé, et comprenant des moyens pour traiter lesdits échantillons (E) du signal de réception, des moyens (16) pour produire la phase moyenne d'une série d'échantillons traités et des moyens (17, 18, 19) pour produire ledit écart de fréquence à partir de ladite phase moyenne de deux séries d'échantillons traités au moins et de la durée séparant le milieu desdites séries, caractérisé en ce que lesdits moyens pour traiter comprennent des moyens (12) pour détecter le déphasage de modulation desdits échantillons du signal de réception, et des moyens (13) pour supprimer le déphasage de modulation qui est détecté dans chacun desdits échantillons du signal de réception par modification uniquement de la phase dudit chacun des échantillons, pour fournir un échantillon traité.

2. Dispositif d'évaluation d'écart de fréquence selon la revendication 1, caractérisé en ce qu'il comprend une unité de commande (10) recevant un signal d'information (I) identifiant pour chacune desdites séries lesdits échantillons traités qui en font partie et produisant un premier signal de commande ($C_1$) au moment où se présente un échantillon du signal de réception à traiter.

3. Dispositif d'évaluation d'écart de fréquence selon la revendication précédente, caractérisé en ce qu'il comprend une porte (11) qui transmet comme signal de sortie (S) un échantillon du signal de réception (E) en réponse audit premier signal de commande ($C_1$).

4. Dispositif d'évaluation d'écart de fréquence selon la revendication précédente, caractérisé en ce que ladite modulation comprenant deux états de phase 0 et $\pi$, lesdits moyens pour détecter le déphasage de modulation sont un détecteur de signe (12) produisant un signal d'inversion N si le déphasage de modulation dudit signal de sortie vaut $\pi$.

5. Dispositif d'évaluation d'écart de fréquence selon la revendication précédente, caractérisé en ce qu'il comprend un circuit de changement de signe (13) produisant un signal de synchronisation (S′) dont la valeur est celle dudit signal de sortie (S) ou son opposé selon que ledit signal d'inversion (N) est respectivement absent ou présent.

6. Dispositif d'évaluation d'écart de fréquence selon la revendication 4, caractérisé en ce que, certains desdits échantillons (E) du signal de reception correspondant à des bits connus qui sont identifiés par ledit signal d'information (I), ladite unité de commande (10) produit un deuxième signal de commande ($C_2$) au moment où un dit échantillon du signal de recéption correspond à un bit connu et un signal de modification (N′) si ledit bit connu présente une phase de $\pi$, et en ce qu'il comprend de plus un circuit de multiplexage (14) produisant un signal d'échange de signe (X) prenant la valeur dudit signal d'inversion (N) ou dudit signal de modification (N′) selon que ledit deuxième signal de commande ($C_2$) est respectivement absent ou présent, et un circuit de changement de signe (13) produisant un signal de synchronisation (S′) dont la valeur est celle dudit signal de sortie (S) ou son opposé selon que ledit signal d'échange de signe (X) est respectivement absent ou présent.

7. Dispositif d'évaluation d'écart de fréquence selon la revendication 5 ou 6, caractérisé en ce qu'il comprend un accumulateur (15) produisant un signal d'accumulation (A) ayant pour valeur la somme des valeurs successives dudit signal de synchronisation (S′), cet accumulateur étant remis à zéro avant le début de chacune desdites séries d'échantillons traités.

8. Dispositif d'évaluation d'écart de fréquence selon la revendication précédente, caractérisé en ce qu'il comprend un circuit de sélection (16) qui transmet à un premier registre (17) ledit signal d'accumulation pour un premier état d'un signal de sélection ($C_3$) identifiant le dernier échantillon traité d'une dite première série d'échantillons traités et a un second registre (18) pour un deuxième état dudit signal de sélection identifiant le dernier échantillon traité d'une dite deuxième série d'échantillons traités ledit signal de sélection étant produit par ladite unité de commande (10), et en ce qu'il comprend un circuit d'évaluation (19) produisant ledit écart de fréquence à partir de la phase moyenne de ladite première série issue dudit premier registre et de la phase moyenne de ladite deuxième série issue dudit second registre.

9. Dispositif d'évaluation d'écart de fréquence selon l'une quelconque des revendications précédentes, caractérisé en ce que ledit signal de réception provient d'un équipement d'émission du système de radiocommunication cellulaire numérique et est structuré en intervalles de temps véhiculant de la parole ou des données, une première et une deuxième dites séries d'échantillons traités correspondant respectivement à une première et à une deuxième partie d'un dit intervalle de temps considéré sans sa séquence de garde.

**Patentansprüche**

1. Vorrichtung zur Bestimmung des Frequenzabstands zwischen der Trägerwelle eines Empfangssignals (R) und einem örtlichen Signal (L), deren Frequenzen nahe beieinander liegen, wobei das Empfangssignal gemäß mehreren Phasenzuständen durch ein Modulationssignal moduliert ist und somit eine Phase besitzt, die sich aus einer Übertragungs-Phasenverschiebung, einer Modulations-Phasenverschiebung entsprechend einem der Phasenzustände und einer Synchronisations-Phasenverschiebung aufgrund des Frequenzabstands zusammensetzt, wobei die Vorrichtung von einem Demodulationsorgan (2, 3, 4) Tastproben (E) des Empfangssignals empfängt, in denen die Übertragungs-Phasenverschiebung beseitigt ist, und Mittel, um die Tastproben (E) des Empfangssignals zu behandeln, Mittel (16), um die mittlere Phase einer Reihe von behandelten Tastproben zu erzeugen, und Mittel (17, 18, 19) aufweist, um den Frequenzabstand aufgrund der mittleren Phase von mindestens zwei Reihen von behandelten Tastproben und aufgrund der die Mitte dieser Reihen voneinander trennenden Dauer zu bilden, dadurch gekennzeichnet, daß die Behandlungsmittel Mittel (12), um die Modulations-Phasenverschiebung der Tastproben des Empfangssignals zu erfassen, und Mittel (13) enthalten, um die erfaßte Modulations-Phasenverschiebung in jeder der Tastproben des Empfangssignals durch alleinige Veränderung der Phase jeder der Tastproben zu beseitigen, so daß eine behandelte Tastprobe geliefert wird.

2. Vorrichtung zur Bestimmung des Frequenzabstands nach Anspruch 1, dadurch gekennzeichnet, daß sie eine Steuereinheit (10) aufweist, die ein Informationssignal (I) liefert, das für jede der Reihen die zu ihr gehörenden behandelten Tastproben identifiziert und ein erstes Steuersignal ($C_1$) liefert, sobald eine zu behandelnde Tastprobe des Empfangssignals vorliegt.

3. Vorrichtung zur Bestimmung des Frequenzabstands nach dem vorhergehenden Anspruch, dadurch gekennzeichnet, daß sie ein Tor (11) aufweist, das als Ausgangssignal (S) eine Tastprobe des Empfangssignals (E) liefert, wenn das erste Steuersignal ($C_1$) vorliegt.

4. Vorrichtung zur Bestimmung des Frequenzabstands nach dem vorhergehenden Anspruch, dadurch gekennzeichnet, daß für eine Modulation, die zwei Phasenzustände 0 und $\pi$ enthält, die Mittel zur Erfassung der Modulations-Phasenverschiebung aus einem Vorzeichendetektor (12) bestehen, der ein Inversionssignal N liefert, wenn die Modulations-Phasenverschiebung des Ausgangssignals den Wert $\pi$ besitzt.

5. Vorrichtung zur Bestimmung des Frequenzabstands nach dem vorhergehenden Anspruch, dadurch gekennzeichnet, daß sie eine Schaltung (13) zum Vorzeichenwechsel aufweist, die ein Synchronisationssignal (S') erzeugt, dessen Wert dem des Ausgangssignals (S) oder seinem Umkehrwert entspricht, je nachdem, ob das Inversionssignal N fehlt oder vorliegt.

6. Vorrichtung zur Bestimmung des Frequenzabstands nach Anspruch 4, dadurch gekennzeichnet, daß, falls gewisse Tastproben (E) des Empfangssignals bekannten Bits entsprechen, die durch das Informationssignal (I) identifiziert werden, die Steuereinheit (10) ein zweites Steuersignal ($C_2$) liefert, sobald eine Tastprobe des Empfangssignals einem bekannten Bit entspricht, sowie ein Veränderungssignal (N'), wenn das bekannte Bit einen Phasenwert $\pi$ aufweist, und daß die Vorrichtung außerdem eine Multiplexierschaltung (14), die ein Vorzeichenwechselsignal (X) erzeugt, das den Wert des Inversionssignals (N) oder den des Veränderungssignals (N') annimmt, je nachdem, ob das zweite Steuersignal ($C_2$) fehlt oder vorliegt, und eine Vorzeichen-Wechselschaltung (13) aufweist, die ein Synchronisationssignal (S') erzeugt, dessen Wert dem des Ausgangssignals (S) oder seinem Umkehrwert entspricht, je nachdem, ob das Vorzei-

EP 0 455 140 B1

chenwechselsignal (X) fehlt oder vorliegt.

7. Vorrichtung zur Bestimmung des Frequenzabstands nach Anspruch 5 oder 6, dadurch gekennzeichnet, daß sie einen Akkumulator (15) aufweist, der ein Akkumulationssignal (A) erzeugt, dessen Wert der Summe der aufeinanderfolgenden Werte des Synchronisationssignals (S′) entspricht, wobei dieser Akkumulator vor Beginn jeder der Reihen von behandelten Tastproben auf Null gesetzt wird.

8. Vorrichtung zur Bestimmung des Frequenzabstands nach dem vorhergehenden Anspruch, dadurch gekennzeichnet, daß sie eine Auswahlschaltung (16) aufweist, die das Akkumulationssignal an ein erstes Register (17) für einen ersten Zustand eines Auswahlsignals ($C_3$) überträgt, der die letzte behandelte Tastprobe einer ersten Reihe von behandelten Tastproben identifiziert, bzw. an ein zweites Register (18) für einen zweiten Zustand des Auswahlsignals, der die letzte behandelte Tastprobe einer zweiten Reihe von behandelten Tastproben identifiziert, wobei das Auswahlsignal von der Steuereinheit (10) erzeugt wird, und daß die Vorrichtung eine Bestimmungsschaltung (19) aufweist, die den Frequenzabstand aufgrund der mittleren Phase der ersten Reihe aus dem ersten Register und der mittleren Phase der zweiten Reihe aus dem zweiten Register bestimmt.

9. Vorrichtung zur Bestimmung des Frequenzabstands nach einem beliebigen der vorhergehenden Ansprüche, dadurch gekennzeichnet, daß das Empfangssignal aus einer Sendevorrichtung des digitalen zellenförmigen Mobilfunksystems stammt und in Zeitintervallen strukturiert ist, die Sprach- oder Dateninformationen übertragen, wobei eine erste bzw. eine zweite Reihe von behandelten Tastproben einem ersten bzw. zweiten Bereich eines der Zeitintervalle ohne die Abstandssequenz entspricht.

## Claims

1. A circuit for evaluating the frequency difference between a local signal (L) and the carrier wave of a receive signal (R) which are close together in frequency, the receive signal having been subjected to phase state modulation by a modulation signal and thus having a phase that includes a transmission phase shift, a modulation phase shift corresponding to one of a plurality of phase states, and a synchronization phase shift due to said frequency difference, said circuit receiving from a demodulator unit (2, 3, 4) samples (E) of said receive signal from which said transmission phase shift has been eliminated, and comprising means for processing said samples (E) of said receive signal, means (16) for producing the mean phase of a series of processed samples, and means (17, 18, 19) for producing said frequency difference on the basis of said mean phase of at least two series of processed samples and on the basis of the time interval between the middles of said series, characterized in that said processing means include means (12) for detecting the modulation phase of said receive signal samples and means (13) for eliminating the modulation phase shift detected in each sample of the receive signal by modifying only the phase of each sample for supplying a processed sample.

2. A circuit for evaluating frequency difference according to claim 1, characterized in that it includes a control unit (10) receiving an information signal (I) identifying those processed samples which constitute a part of each of said series and producing a first control signal (C1) at the moment a sample of the received signal to be processed appears.

3. A circuit for evaluating frequency difference according to claim 2, characterized in that it includes a gate (11) for providing an output signal (S) constituted by one of the samples (E) of the receive signal in response to said first control signal (C1).

4. A circuit for evaluating frequency difference according to the preceding claim, characterized in that said modulation comprises two phase states zero and $\pi$, with said means for detecting the modulation phase shift being a sign detector (12) producing an invert signal N if the modulation phase shift of said output signal is $\pi$.

5. A circuit for evaluating frequency difference according to the preceding claim, characterized in that it comprises a sign changing circuit (13) producing a synchronization signal (S′) whose value is equal to the value of said output signal (S) or to its inverse, depending on whether said invert signal (N) is absent or present, respectively.

9

6. A circuit for evaluating frequency difference according to claim 4, characterized in that some of said samples (E) of the receive signal correspond to known bits that are identified by said information signal (I), said control unit (10) producing a second control signal (C2) at the moments when one of said receive signal samples corresponds to a known bit, together with a modify signal (N′) if the phase of said known bit is $\pi$, and in that it further includes a multiplexer circuit (14) producing a sign change signal (X) which takes the value of said invert signal (N) or said modify signal (N′) depending on whether said second control signal (C2) is absent or present, respectively, and a sign-change circuit (13) producing a synchronization signal (S′) whose value is the value of said output signal (S) or of its inverse, depending on whether said sign-change signal (X) is absent or present, respectively.

7. A circuit for evaluating frequency difference according to claim 5 or 6, characterized in that it includes an accumulator (15) producing an accumulation signal (A) whose value is the sum of the successive values of said synchronization signal (S′), said accumulator being reset to zero before the beginning of each of said series of processed samples.

8. A circuit for evaluating frequency difference according to the preceding claim, characterized in that it includes a selector circuit (16) which transmits said accumulation signal to a first register (17) during a first state of a select signal (C3) identifying the last processed sample of a first one of said processed sample series, and to a second register (18) during a second state of said select signal identifying the last processed sample of a second one of said processed sample series, said select signal being produced by said control unit (10), and in that it includes an evaluator circuit (19) producing said frequency difference on the basis of the mean phase of said first series from said first register and the mean phase of said second series from said second register.

9. A circuit for evaluating frequency difference according to any preceding claim, characterized in that said receive signal comes from transmission equipment in a digital cellular radiocommunications system and is organized into time intervals that convey speech or data, with first and second ones of said processed sample series corresponding respectively to first and second portions of one of said time intervals under consideration minus its guard sequence.

# FIG. 1

# FIG. 2

# FIG. 3